# EUROPEAN PATENT APPLICATION

(11) **EP 4 310 726 A1**
(43) Date of publication of application: **24.01.2024**
(21) Application number: 22186063.8
(22) Date of filing: 20.07.2022
(51) Int. Cl.: G06N 3/04, G06N 3/08

(54) **APPARATUS AND METHOD FOR CHANNEL IMPAIRMENT ESTIMATIONS USING TRANSFORMER-BASED MACHINE LEARNING MODEL**

(71) Applicant: Nokia Solutions and Networks Oy, 02610 Espoo (FI)
(72) Inventor: DIERICKX, Philippe, Saint-Gery (BE); VAN DAMME, Axel, Loyers (BE); DUPUIS, Nicolas, Chaudfontaine (BE); DELABY, Olivier, Loyers (BE)
(74) Representative: Trichard, Louis

(57) **Abstract**

An apparatus, method and computer program is described comprising: obtaining channel response data comprising a channel frequency response of a channel over a frequency spectrum, wherein the channel frequency response is generated in response to a transmission over the channel or a simulation thereof; and generating an indication of channel impairments in response to applying the channel response data to a transformer-based machine-learning (ML) model trained to predict a channel impairment estimate.

## Description

### Field

The specification relates to channel impairment estimation for a channel and, in particular, estimating one or more channel impairments by a transformer-based machine learning (ML) model from an input channel frequency response associated with the channel.

### Background

Conventional techniques for diagnosing channel impairments over existing communication channels prior to deployment typically require a significant upfront investment in resources for testing and performance measurements. However, there remains a need for further developments in this field.

### Summary

In a first aspect, this specification describes an apparatus comprising means for performing: obtaining channel response data comprising a channel frequency response of a channel over a frequency spectrum, wherein the channel frequency response is generated in response to a transmission over the channel or a simulation thereof; and generating an indication of channel impairments in response to applying the channel response data to a transformer-based machine-learning (ML) model trained to predict a channel impairment estimate.

In some example embodiments, the channel response data comprises a one-dimensional channel response vector comprising data representative of a Hlog channel response.

In some example embodiments, the transformer-based ML model further comprising a pre-processing component, coupled to a transformer encoder neural network and multiclass classifier, wherein: the pre-processing component is configured for pre-processing the channel response data into a multi-dimensional embedding for input to a transformer encoder neural network; the transformer encoder neural network is configured for processing the multi-dimensional embedding and outputting a multi-dimensional encoded signal of the channel response data; the multi-class classifier configured for processing the multi-dimensional encoded signal and predicting a multiclass channel impairment estimate.

In some example embodiments, the transformer encoder neural network is a visualisation transformer ML model and the pre-processing unit is configured to encode the channel response data into a multi-dimensional embedding for input to the visualisation transformer ML model.

In some example embodiments, the pre-processing unit is further configured to group the data elements of the input channel response data into patches and generating the multi-dimensional embedding that projects each of the patches along a projection dimension of length pdim.

In some example embodiments, the pre-processing unit is a neural network ML model configured for feature extraction and encoding of the channel response data into a multi-dimensional embedding for input to the transformer encoder neural network.

In some example embodiments, the neural network ML model is configured to process groupings of the data elements of the input channel response data, perform feature extraction of the groupings, and generate a multi-dimensional embedding that projects each of the data elements of the input channel response along a projection dimension of length pdim.

In some example embodiments, the neural network ML model is a convolutional encoder neural network ML model. As an option, the convolutional encoder neural network ML model further comprising a neural network of one or more convolution layers, one or more pooling layers, and one or more fully-connected layers configured for extracting a channel response feature set and outputting the multi-dimensional embedding of said channel response feature set for input to the transformer encoder neural network.

In some example embodiments, the transformer encoder neural network comprises one or more transformer encoders coupled together, wherein each transformer encoder comprises one or more multi-headed attention layers, one or more normalisation layers, and wherein at least the final transformer encoder includes one or more multi-layer perceptron layers for outputting the multi-dimensional encoding of the channel response data.

In some example embodiments, the multiclass classifier comprises at least one fully connected neural network layer and at least one SoftMax neural network layer configured for receiving and processing the multi-dimensional encoding of the channel response data and outputting a predicted multiclass channel impairment estimate, the multiclass channel impairment estimate representing an indication of one or more classes of channel impairments.

In some example embodiments, the transformer encoder neural network, multiclass classifier and the pre-processing component are jointly trained. In some example embodiments, the transformer encoder neural network, multiclass classifier and the pre-processing component may be separately trained.

In some example embodiments, the apparatus further comprising means for performing: training of the transformer-based ML model based on:
obtaining training data instances, each training data instance comprising data representative of a channel response and data representative of a target channel impairment associated with the channel response; applying a training data instance to the transformer-based ML model; estimating a loss based on a difference between the estimated channel impairment(s) output by the transformer-based ML model and the target channel impairment(s) of each training data instance; and updating a set of weights associated with the transformer-based ML model based on the estimated loss.

In some example embodiments, each training instance comprises at least one from the group of: channel response data generated in response to a transmission over an example channel or a simulation thereof, and annotated with target channel impairment data identified in relation to the transmission over the example channel or simulation thereof; channel response data generated and measured in response to a transmission over a real-world channel, and annotated with target channel impairment data identified in relation to the transmission over the real-world channel; channel response data generated in response to a transmission over a simulated channel and augmented to simulate real-world data losses or spurious noise, and annotated with channel impairment data identified in relation to the transmission over the simulated channel.

In some example embodiments, a batch of samples of training instance data is applied to the transformer-based ML model, and the means for performing estimating said loss is further configured for: estimating, for each training instanced in a batch, a loss based on a difference between the estimated channel impairment(s) output by the transformer-based ML model and the target channel impairment(s) of said each training data instance; and combining the loss estimates for each training instance in the batch; and the means for performing the updating of the set of weights is further configured for updating the set of weights associated with the transformer-based ML model based on the combined estimated loss for said batch of samples.

In some example embodiments, the means comprise: at least one processor; and at least one memory including computer program code, the at least one memory and computer program code configured to, with the at least one processor, cause the performance of the apparatus.

In some example embodiments, the channel is a communications medium comprising a wired communications medium or, a wireless communications medium, or a combination of both.

In a second aspect, this specification describes a method comprising: obtaining channel response data comprising a channel frequency response of a channel over a frequency spectrum, wherein the channel frequency response is generated in response to a transmission over the channel or a simulation thereof; and generating an indication of channel impairments in response to applying the channel response data to a transformer-based ML model trained to predicting a channel impairment estimate.

In a third aspect, this specification describes a computer program comprising instructions for causing an apparatus to perform at least the following: obtaining channel response data comprising a channel frequency response of a channel over a frequency spectrum, wherein the channel frequency response is generated in response to a transmission over the channel or a simulation thereof; and generating an indication of channel impairments in response to applying the channel response data to a transformer-based ML model trained to predicting a channel impairment estimate.

In a fourth aspect, this specification describes computer-readable instructions which, when executed by a computing apparatus, cause the computing apparatus to perform (at least) any method as described with reference to the second aspect.

In a fifth aspect, this specification describes a computer-readable medium (such as a non-transitory computer-readable medium) comprising program instructions stored thereon for performing (at least) any method as described with reference to the second aspect.

The term "machine learning" is abbreviated as ML, which will be is used throughout the following text.

### Brief Description of Drawings

Example embodiments will now be described, by way of non-limiting examples, with reference to the following schematic drawings, in which:
FIG. 1 is a block diagram of an example system;
FIG. 2 shows an example channel frequency response measurement in the example system;
FIG. 3 is a block diagram of a signal processing module in accordance with an example embodiment;
FIG. 4 is a block diagram of a system in accordance with an example embodiment;
FIG. 5 is a block diagram of a transformer-based ML model in accordance with an example embodiment;
FIG. 6 is a block diagram of an example transformer-based ML training system in accordance with an example embodiment;
FIG. 7a is a block diagram of another example transformer-based ML model in accordance with an example embodiment;
FIG. 7b is a table illustrating performance results and model parameters for the example transformer-based ML model of figure 7a in accordance with an example embodiment;
FIG. 7c is another table illustrating performance results and model parameters for the example transformer-based ML model of figure 7a in accordance with an example embodiment;
FIG. 8a is a block diagram of a further example transformer-based ML model in accordance with an example embodiment;
FIG. 8b is a block diagram of an example ML pre-processing model for the transformer-based ML model of figure 8a according with an example embodiment;
FIG. 8c is a block diagram of an example ML multi-class classifier model for the transformer-based ML model of figure 8a according with an example embodiment;
FIG. 8d is a table illustrating performance results and model parameters for the example transformer-based ML model of figure 8a in accordance with an example embodiment;
FIG. 9 is a flow chart showing an algorithm in accordance with an example embodiment;
FIG. 10 is a flow chart showing a training algorithm in accordance with an example embodiment;
FIG. 11 is a block diagram of components of a system in accordance with an example embodiment; and
FIG. 12 shows an example of tangible media for storing computer-readable code which when run by a computer may perform methods according to example embodiments described above.

### Detailed Description

The scope of protection sought for various embodiments of the invention is set out by the claims. The embodiments and features, if any, described in the specification that do not fall under the scope of the independent claims are to be interpreted as examples useful for understanding various embodiments of the invention.

In the description and drawings, like reference numerals refer to like elements throughout.

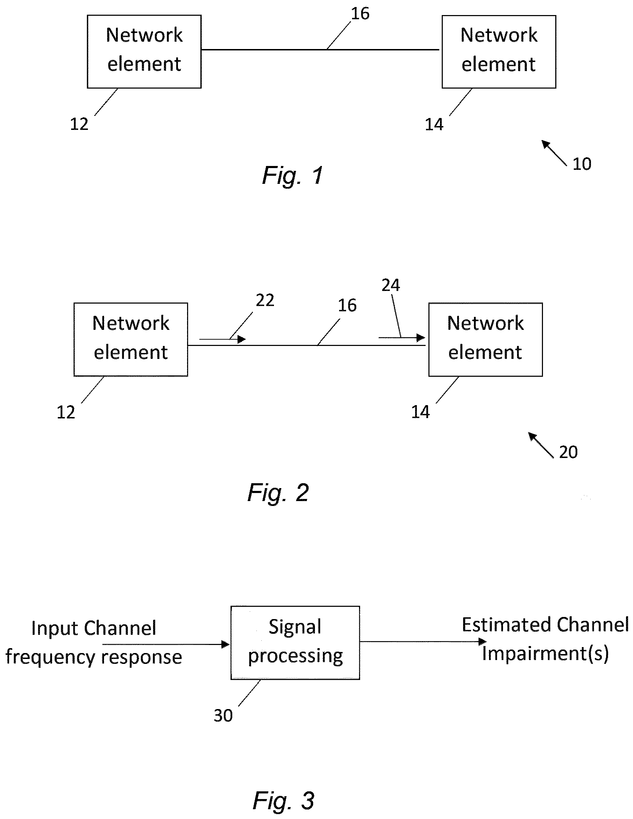

FIG. 1 is a block diagram of an example system, indicated generally by the reference numeral 10. The system comprises a first network element 12 and a second network element 14 connected by a communication link 16. The communication link 16 comprises a communication channel over which transmission signals are transmitted between the first and second network elements 12 and 14.

The network elements 12 and 14 may be part of access nodes and/or of customer end user equipment of a communication system and may, for example, be located at customer premises and/or a network operator's premises (e.g., with one node being at a network operator and the other at customer premises). The communication link 16 may be a cable, such as a twisted pair of copper wires, but may take many other forms, such as an optical fibre cable or a wireless connection. Moreover, the communication link may comprise a combination of technologies, such as copper cable sections, fibre optic sections, and/or wireless sections.

In one example embodiment, the communication link 16 is a digital subscriber line (DSL) but may take other forms, such as links of a smart grid (e.g., electrical cables over which communication can take place), wireless solutions, optical fibre cables, Ethernet cables, powered line communication (PLC), and/or combinations thereof and the like. The skilled person will be aware of other communication links that could make use of the principles described herein.

Specifically in such communication networks, with the increasing bitrate offerings such as, for example, the deployment of Internet Protocol television (IPTV) solutions, Video-On-Demand and Triple-play services etc., the performance of communication systems, such as the system 10, are becoming increasingly important. The physical link, which transports the information through, for example, the wire lines up to the end user, is a known bottleneck for Quality of Service (QoS). Hence, the importance of being able to efficiently, reliably and remotely diagnose sources of physical problems and take actions to improve performance. The sources of physical problems are commonly referred to as channel impairments (e.g., bridge taps, capacitive coupling, and other impairments), which can severely reduce line performance. For example, channel impairments may include, without limitation, for example non-impaired line (NIL), bridged tap (BTap), capacitive coupling, resistive coupling, insulation fault, mismatched segments, degraded contact, and/or any other type of channel impairment or channel configuration/materials and the like that may indicate and/or affect the performance of communicating over the channel of the communication link 16. For the remainder of this text, a channel impairment estimate, indication or classification may yield a "no impairment" or NIL line result indicating the channel is free of any known impairments.

Moreover, recent technology evolutions tend to push the signal bandwidth of current communication links, such as DSL lines or wireless communications, higher. For example, in the recent past, traditional ADSL technology used frequencies up to 1.1 MHz, Very-high rate DSL (VDSL2) technology can be applied up to 17 MHz or even 35 MHz. The extensive use of those higher frequencies as well as solutions to increase performance can make an existing communication link 16 more sensitive to disturbances. This is particularly so for upcoming DSL communication technologies and standards such as, for example, G.fast and G.mgfast communications technologies that may use bandwidths up to 106 MHz (or 212 MHz) and 424 MHz (or even 848 MHz), respectively. Thus, it is increasingly important to be able to efficiently, reliably and remotely diagnose sources of physical problems/channel impairments and take actions to maintain and/or improve performance of all communications links.

Offering solutions to correctly diagnose channel impairments, provision, configure, deploy, monitor and troubleshoot of existing and/or new communication links 16 offers many advantages.

FIG. 2 is a block diagram of a system, indicated generally by the reference numeral 20, in accordance with an example embodiment. The system 20 comprises the first network element 12, the second network element 14 and the communication link 16 of the system 10 described above. The network elements 12 and 14 may be configured for communicating over the communication link 16 based on, without limitation, for example DSL technology.

The channel frequency response of the channel of communication link 16 is one of the performance metrics that may be used to analyse the performance of the communication link 16. The channel frequency response of the channel of communication link 16 may be measured by transmitting a transmission signal 22 from network element 12 over communication link 16 and measuring a received signal 24 associated with the transmitted transmission signal 22 at network element 14. This may be used to derive the channel frequency response of the channel of communication link 16, which comprises the attenuation of the channel (or communication medium) of communication link 16 over a frequency bandwidth of interest. For example, DELT (Dual-Ending Line Testing) may be performed using data obtained while network elements 12 and 14 (e.g., modems) at each end of communication link 16 are operating, which permits measurement of the channel frequency response, commonly called Hlog when expressed in decibels. The amplitude of the channel frequency response, also referred to herein as Hlog when expressed in decibels, is a key metric for many communication systems and can, for example, be used to define the signal-to-noise ratio (SNR) of a link. The channel frequency response may be displayed along with the transmitted power spectral density (PSD) of the transmission signal 22, the received PSD of the received signal 24 and noise PSD and the like.

The network elements 12 and/or 14 may be transceiver units (transmitter/receivers) such as, for example, modems that connect with each other over the channel of the communication link 16. Operational data that may be measured during transceiver unit operation may include, without limitation, for example the channel frequency response (Hlog), the Quiet/Active Line Noise (QLN/ALN), transmitted Power Spectral Density (TxPSD), noise PSD, SNR and the like. These are required in order to establish and maintain communications to a certain level of performance. In essence, this requires having transceiver units 12 and 14 connected to the channel medium of communication link 16 at both ends and for operating within the frequency spectrum of the transceiver unit under service.

However, legacy algorithms that detect, for example, DSL impairments contain many disadvantages such as, without limitation, for example: a) the independence of each sensor leading to inaccurate diagnosis and excessive amount of false positives; b) the presence with high confidence of concurrent/opposite diagnosis; c) the ability to generalize to any medium (e.g. any topology, any cable gauge, any insulator,...) is limited because these sensors have been designed for only a few specific cases; and d) not every channel impairment affecting the channel frequency response of a channel have been studied/analysed. Thus, these legacy algorithms have only been developed for a few specific channel impairment problems (e.g., bridge tap sensor, capacitive coupling sensor) but, not for every known type of channel impairment or combinations thereof. The result is most wired network channels have limited channel impairment coverage, resulting in low robustness and accuracy when diagnosing solutions for maintaining and/or improving performance of such channels.

FIG. 3 is a block diagram of an apparatus 30 comprising a processor/memory forming together in an embodiment a signal processing module, in accordance with an example embodiment. This apparatus receives at one or more inputs an input channel frequency response over a frequency spectrum in response to a transmission of a transmission signal 22 over the channel of communication link 16 or in response to a simulation of the channel of communication link 16. The apparatus 30 is configured to generate an estimate of one or more channel impairment(s) in response to processing the input channel frequency response.

Although the systems and methods describe the input channel frequency response over the frequency spectrum is based on using DSL/VDSL/G.fast/G.mgfast and/or wired/cable technologies, this is by way of example only and the invention is not so limited, it is to be appreciated by the skilled person in the art that the systems and methods as described herein may be used to derive, predict, and/or estimate, from any given set of input channel frequency response measurements and/or simulation thereof, the corresponding estimated channel impairments in relation to the channel from which the input channel frequency response was measured and/or simulated over any type of communication system such as, without limitation, for example wired telecommunications (e.g. Copper, Fiber, Coax, PLC, and the like) and/or wireless telecommunications.

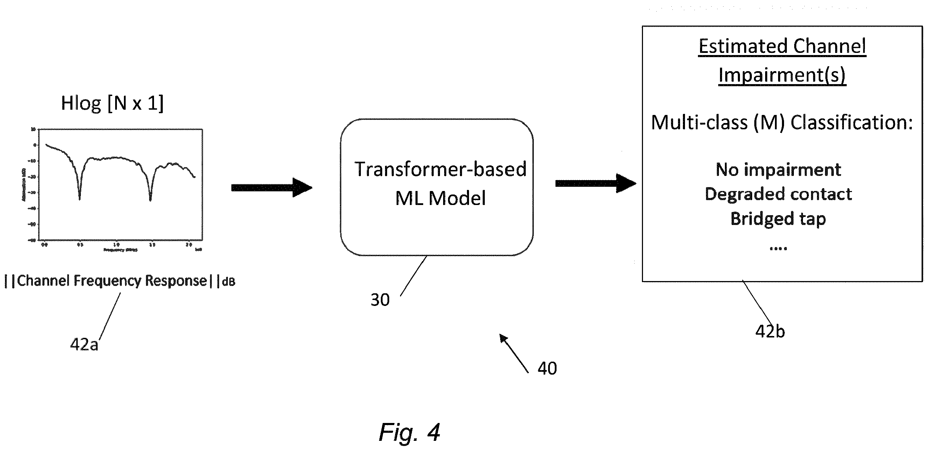

FIG. 4 is a block diagram of the apparatus 30 of FIG. 3 in a system 40 configured for implementing a trained transformer-based machine-learning model for receiving channel response data 42a (e.g., an Hlog) and generating data representative of estimated channel impairment(s) 42b of a channel of communication link 16 corresponding to the channel response data 42a. The channel response data 42a may be obtained from a channel frequency response of the channel over a frequency spectrum. The channel frequency response 42a may be generated in response to a transmission over the channel of communication link 16 or a simulation thereof.

The channel response data 42a that maybe input to the apparatus 30 may comprise a frequency channel response over a frequency spectrum with a frequency range between a first and a second frequency (e.g. [fi, f2]) and may be denoted Hlog. For example, for a DSL system, the first frequency (e.g., fi) maybe in the order of the minimum DSL operating frequency and the second frequency (e.g., f2) may be in the order of the maximum DSL operating frequency. The Hlog may be represented as an N-dimensional vector over the frequency range [f1, f2], where f1≥0, in which the elements of the *N*-dimensional vector are N spaced apart frequency tones over the frequency range [fi, f2]. The N spaced apart frequency tones over the frequency range [fi, f2] are typically equally spaced. For example, for DSL systems the Hlog may be an N-dimensional vector over the frequency range from [0, f2], where f2 is the maximum DSL operating frequency. Alternatively, the Hlog may be represented as an N-dimensional vector over the frequency range [f1, f2]. For most current DSL systems *N*=512 and the Hlog is taken over the frequency range [0, f2] with N equally spaced apart frequency tones. Given this, with each different type of DSL system having a different minimum operating frequency, the *N*-dimensional Hlog channel response data 42a may be truncated to exclude the L frequency tones < fi, which may be removed from the original *N*-dimensional Hlog so only *N-L* frequency tones over the frequency range [fi, f2] may be used as input.

The trained transformer-based ML model of apparatus 30 is any suitable transformer-based ML model for generating or synthesizing an estimated channel impairment estimate 42b in response to data representative of channel response data 42a in relation to a channel of a communication link 16 when applied to the input of the transformer-based ML model of apparatus 30. The trained transformer-based ML model of apparatus 30 has been trained to predict, generate or estimate/classify one or more channel impairment estimates/classifications in response to applying data representative of a channel frequency response 42a over a frequency spectrum to the transformer-based ML model. For example, the transformer-based ML model of apparatus 30 maybe based on one or more ML models from the group of: a transformer neural network comprising at least one transformer encoder, which includes at least one multi-head attention layer, at least one normalisation layer and one or more multi-layer perceptron layers, each layer associated with a set of parameters/weights. The transformer neural network may further include a pre-processing unit comprising a plurality of neural network layers, each neural network layer associated with a corresponding set of parameters/weights; a convolutional neural network ML model comprising one or more convolutional layers alternating with one or more pooling layers associated with a corresponding set of parameters/weights. The transformer neural network may further include a multiclass classifier unit (e.g., M channel impairment classes) comprising, without limitation, for example one or more neural network layers, one or more dense neural network layers, and a SoftMax layer, each layer associated with a corresponding set of parameters/weights; and which outputs a channel impairment estimate/classification. In some example embodiments, the multiclass classifier may comprise at least one fully connected neural network layer and at least one SoftMax neural network layer configured for receiving and processing the multi-dimensional encoding of the channel response data and outputting a predicted multiclass channel impairment estimate, the multiclass channel impairment estimate representing an indication of one or more classes of channel impairments. For example, the output channel impairment estimate may comprise data representative of a multi-class channel impairment classification vector representing a number of *M* different types of channel impairments, without limitation, for example no impairment or NIL, BTap, capacitive coupling, resistive coupling, insulation fault, mismatched segments, degraded contact, and/or any other type of channel impairment or channel configuration/materials and the like that may indicate and/or affect the performance of communicating over a channel of the communication link associated with the input channel frequency response.

In essence, training of the transformer-based ML model of apparatus 30 may be based on obtaining a training dataset comprising a plurality of training data instances. Each training data instance comprising data representative of an input channel response over an input frequency spectrum annotated with data representative of one or more channel impairments associated with said input channel response. In some example embodiments, the transformer encoder neural network, multiclass classifier and the pre-processing component of the transformer-based ML model are jointly trained. In other example embodiments, one or more of the transformer encoder neural network, multiclass classifier and the pre-processing component of the transformer-based ML model may be separately trained, then combined to form the transformer-based ML model. Further training may be required to optimise the combined components.

For each training iteration of a plurality of training iterations the following may be performed: one or more training data instances (or a batch of training instances) are applied to the transformer-based ML model, which outputs predictions of one or more estimated channel impairments; an estimation of a loss is performed based on a difference between the predicted one or more estimated channel impairments output by the transformer-based ML model and the corresponding one or more target channel impairments of each of the one or more training data instances. The sets of weights/parameters of the transformer-based ML model may be updated based on the estimated loss. When batches of training data instances are used, the estimated loss may be a combination or an accumulation of the estimated loss for each training data instance, where the weights/parameters of the transformer-based ML model are updated after each batch has been processed. In each subsequent iteration of the plurality of training iterations further one or more training instances (e.g., further batches of training instances) are retrieved for applying to the transformer-based ML model, estimating the loss and updating the weights of the transformer-based ML model and the like. Training the transformer-based ML model of apparatus 30 may stop once a stopping criterion is reached, e.g., an error threshold is met, or a maximum number of training iterations/epochs is reached, or other performance metric associated with the particular type of transformer-based ML model is met.

Each training instance may include, for example, data representative of channel response data generated in response to a transmission signal 22 over an example channel of communication link 16 or a simulation thereof, which is annotated with data representative of a corresponding channel impairment (e.g. a label or class representing a type of channel impairment) identified or simulated in relation to the channel of communication link 16. In other examples, each training instance comprises at least one from the group of: channel response data generated in response to a transmission over an example channel or a simulation thereof, and annotated with target channel impairment data identified in relation to the transmission over the example channel or simulation thereof; channel response data generated and measured in response to a transmission over a real-world channel, and annotated with target channel impairment data identified in relation to the transmission over the real-world channel; channel response data generated in response to a transmission over a simulated channel and augmented to simulate real-world data losses or spurious noise, and annotated with channel impairment data identified in relation to the transmission over the simulated channel.

In some embodiments, when a batch of samples of training instance data is applied to the transformer-based ML model, performing estimating said loss may include the following: estimating, for each training instanced in a batch, a loss based on a difference between the estimated channel impairment(s) output by the transformer-based ML model and the target channel impairment(s) of said each training data instance; and combining the loss estimates for each training instance in the batch. Performing the updating of the set of weights further includes updating the set of weights associated with the transformer-based ML model based on the combined estimated loss for said batch of samples.

After training with a number of training examples, the trained transformer-based ML model of apparatus 30 may be used for inference/classification and is configured to receive input channel response data comprising a representation of the channel response of a channel of a communication link, which may be measured or simulated. The trained transformer-based ML model of apparatus 30 processes the input channel response data to predict a channel impairment estimate for classifying/indicating whether or not the channel has one or more estimated channel impairments (e.g., no channel impairments, one or more types of channel impairments). The estimated channel impairments may be used to troubleshoot, maintain and/or improve the performance of the channel of the communication link.

The input channel response data used for generating the training instances for training the transformer-based ML model and/or for input to the trained transformer-based ML model of apparatus 30 may be provided in the form of a 1-dimensional input channel response vector of channel response values over a frequency spectrum/range between a first frequency and a second frequency (e.g. [fi, f2]), which represents Hlog. The first frequency being the minimum operating frequency of the communication system (e.g., DSL system) and the second frequency being the maximum operating frequency of the communication system. The input channel response vector may be based on real-time measurements from a channel of a communication link in which a network element 12 or 14 may measure and output the channel response as a vector of amplitude/attenuation values in a standard format and size.

For example, the VDSL2 standard G.993.2 in section 11.4.1.1.1, G.fast standard G.9701 in section 11.4.1.2.1, and/or G.mgfast standard G.9711 in section 11.4.1.2.1 provide example measurement requirements, output formats and/or vector sizes for use in measuring the channel response of a VDSL2, G.Fast, and/or G.mgfast channel of a communication link. Two formats for the channel characteristics or response are defined in these standards including for example: a) Hlin(f) a format providing complex values of the channel characteristics (e.g., attenuation values) on a linear scale; and 2) Hlog(f) a format providing magnitude values of the channel characteristics (e.g., attenuation values) on a base 10 logarithmic scale. Although the Hlog(f) channel response is described herein, and denoted Hlog, and used in the embodiments of the apparatus, system and transformer-based ML models described herein, this is for simplicity and by way of example only and the invention is not so limited, it is to be appreciated by the skilled person that other channel response formats other than Hlog format such as, for example, the Hlin(f) format may be used for the input channel frequency response vectors in some of the embodiments of the apparatus, systems, and/or transformer-based ML models as described herein as the application demands. For simplicity to illustrate the embodiments, the Hlog format is referred to herein.

In an embodiment, the elements of the input channel response vector (or input Hlog vector) correspond to an ordered set of channel response values (e.g., attenuation) at discrete equally spaced apart frequencies from the first frequency (e.g., fi) to the second frequency (e.g., f2). The first frequency being a minimum operating frequency of the input frequency spectrum of the input channel response and the second frequency being the maximum frequency of the input frequency spectrum of the input channel response. For example, the first element of the input channel response vector may correspond to the channel frequency response value (e.g., attenuation) measured (or simulated) at the first frequency and the last element of the vector may correspond to the channel frequency response value (e.g., attenuation) measured (or simulated) at the second frequency. Each subsequent element of the input channel response vector corresponds to a channel response value for a subsequent frequency within the input frequency range.

Each input channel response vector may be fixed or set to a particular size or length N (e.g., 512 or other suitable length) so that the input to the transformer-based ML model is standardised. This may then require pre-processing of the training dataset to normalise the frequency ranges of the channel responses to fit within the fixed size input vector. For example, should there be one or more training data instances having input channel responses of different frequency spectrums/ranges, then training instance with the maximum frequency range may be found to set the maximum frequency of the input channel response that the transformer-based ML model may be trained with, thus the last element of the input channel response vector corresponds to this maximum frequency (e.g., maximum frequency of VDSL, VDSL2, G.fast or G.mgfast). This then sets the frequency spacing between the elements of the input vector. Then for other input channel responses with smaller frequency spectrums, the input channel response vector has the corresponding channel response values inserted/interpolated into each element of the vector until the maximum of the smaller frequency spectrum with any remaining elements of the input vector padded with zeros.

Alternatively or additionally, multiple transformer-based ML models may be trained, each corresponding to a particular input frequency spectrum or particular first and second operating frequencies for a particular type of communication system (e.g. one of VDSL, VDSL2, G.fast or G.mgfast). Thus, for each transformer-based ML model, the input channel response vector maybe set to a specific size N (e.g., 512 or other suitable value) and covers a particular frequency spectrum for that type of communication system (e.g., one of VDSL, VDSL2, G.fast or G.mgfast). Once each transformer-based ML model has been trained, they may be combined as an ensemble to form the transformer-based ML model of apparatus 30, where, when the apparatus 30 receives an input channel response data and the type of communication system or indication of the frequency spectrum of the channel response data, then, from the multiple trained transformer-based ML models, the transformer-based ML model that corresponds to that frequency spectrum is selected and used to estimate/classify the channel impairment associated with the input channel response data.

Each transformer-based ML model may be trained using a selected set of hyperparameters that the corresponding ML learning process or algorithm uses, during training, to iteratively generate trained model parameters/weights (e.g., one or more sets of weights and/or coefficients) defining the trained transformer-based ML model of apparatus 30. Hyperparameters may include, without limitation, for example: batch size; patch size; projection dimension; number of transformer encoders; number of heads of the multi-head attention layer; number of normalisation layers; number of MLP layers and the like; pre-processing architecture/topology hyperparameters; ML multiclass classifier architecture/topology hyperparameters; train-test split ratio; learning rate in optimization algorithms (e.g. gradient descent, etc.); choice of optimization algorithm (e.g., gradient descent, stochastic gradient descent, or Adam optimizer, etc.); choice of activation function in one or more neural network (NN) and/or SoftMax layers (e.g. Sigmoid, ReLU, Tanh, etc.); choice of cost or loss function the transformer-based model will use such as, when performing channel impairment classification, then a cost or loss function may based on, without limitation, for example binary cross-entropy, categorical cross-entropy, sparse categorical cross-entropy, Poisson loss function, KL divergence loss function, any other suitable cross-entropy or loss function, combinations thereof, modifications thereto, as herein described, and/or as the application demands; number of hidden layers in a NN; number of activation units in each layer; drop-out rate/probability in NN; number of iterations (epochs) in training; kernel or filter size in any convolutional layers; pooling size for any pooling layers; and/or any other parameter or value that is decided before training begins and whose values or configuration does not change when training ends.

The quality of the resulting trained transformer-based ML model typically depends on the selected set of hyperparameters used to train it. Thus, selecting an appropriate set of hyperparameters (or hyperparameter tuning) may be performed using various optimisation and search algorithms as is well known by a skilled person such as, without limitation, for example, grid search (e.g. testing all possible combinations of hyperparameters), randomized search (e.g. testing as many combinations of hyperparameters as possible), informed search (e.g. testing the most promising combinations of hyperparameters as possible), and/or evolutionary algorithms such as genetic algorithms (e.g. using evolution and natural selection concepts to select hyperparameters) and/or any other hyperparameter tuning algorithm as is well known by the skilled person. The resulting hyperparameters may be used for training the final transformer-based ML model.

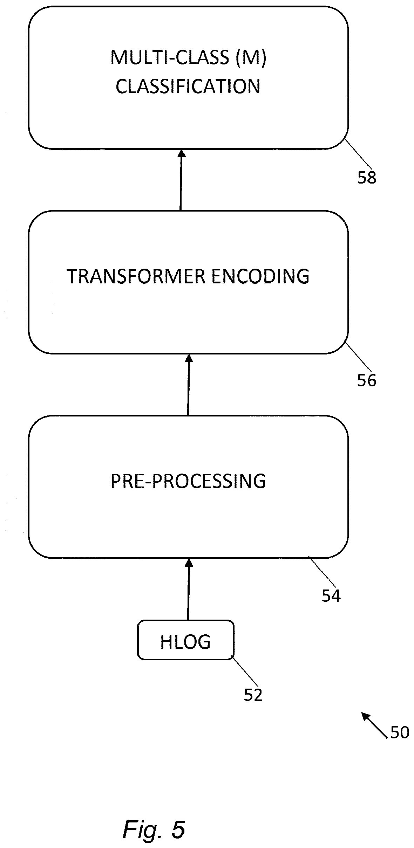

FIG. 5 is a block diagram of a transformer-based ML model 50 for use in system 30 in accordance with an example embodiment. The transformer-based ML model 50 may be implemented by apparatus 30 and/or training system 60 as described herein.

In this embodiment, the system 50 comprises inputting data representative of the channel response data 52 (e.g., Hlog) over a frequency spectrum as a sequence to a pre-processing module 54, which is configured to process the 1-dimensional channel response data into a multi-dimensional embedding of the channel response data 52 suitable for input to a transformer encoder module 56. The transformer encoder module 56 is configured to process the multi-dimensional embedding of the channel response data 52 to extract a multi-dimensional encoding of the relevant features of the channel response data and output the multi-dimensional encoding of the channel response data 52 for input to a multi-class classifier 58. The multi-class classifier 58 is configured to process the multi-dimensional encoding of the channel response data 52 via one or more neural network layers and e.g. an output SoftMax layer configured to output a predicted multiclass channel impairment estimate, the multiclass channel impairment estimate representing an indication of one or more classes of channel impairments. The SoftMax layer or SoftMax activation layer is a neural network layer in which a so-called SoftMax activation function is used on each output neuron in the layer to normalize the output values into a probability distribution. The SoftMax layer may be used in the final layer of a neural network-based classifier. The predicted multiclass channel impairment estimate may also be referred to as a predicted multiclass channel impairment classification.

The multiclass channel impairment estimate may be an *M* dimensional vector in which each element represents a probability or likelihood of a particular channel impairment class from a set of *M* channel impairment classes, which may include channel impairment classes representative of, without limitation, for example no channel impairment, degraded contact channel impairment, at least one bridged tap channel impairment, capacitive coupling channel impairment, and any other type of channel impairment associated with a channel of a communication link 16 being tested or measured/simulated and the like.

As an example, the pre-processing module 54 may be configured as an embedding module for performing an embedding and positional encoding of the channel response data 52. The pre-processing module 54 may further include a patch module configured for grouping the data elements of the channel response data 52 into patches or mutually exclusive sub-groups and a patch embedding module configured for generating the multi-dimensional embedding that projects each of the patches or sub-groups along a projection dimension of length pdim>0. The patch embedding module may be based on a neural network or other embedding encoder/structure. Alternatively or additionally, the pre-processing module 54 may be configured as a feature extraction and embedding neural network ML model configured for receiving the sequence of the channel response data 52 (e.g., Hlog) and performing feature extraction of the channel input response data 52, embedding and positional encoding of the channel response data 52. For example, the feature extraction and embedding neural network ML model may include a convolutional encoder neural network ML model. The convolutional encoder neural network ML model may include one or more convolutional neural network layers, one or more pooling layers, and one or more fully-connected neural network layers and configured for extracting a channel response feature set and outputting the multi-dimensional embedding of said channel response feature set for input to the transformer encoder.

The positional encoding enables the transformer-based encoder to make use of the order of the channel response data sequence. The multi-dimensional embedding of the channel response data 52 may be applied as a sequence to the transformer-based encoder 56. The transformer-based encoder 56 may be a transformer encoder neural network comprising number Nx≥1 of transformer encoder neural network layers sequentially coupled together, in which a first transformer encoder neural network layer receives and processes the multi-dimensional embedding of the channel response data to extract a multi-dimensional encoding of the relevant features of the channel response data, which, if Nx>1, feeds as input to a subsequent transformer encoder neural network for further processing, until a final transformer encoder neural network outputs the final multi-dimensional encoding of the relevant features of the channel response data for input to the multi-class classification module 58.

Each transformer encoder neural network layer of the transformer encoder module 56 may include at least a multi-head attention module, and one or more add and normalise modules, and/or a multi-layer perceptron module including feedforward neural network layer(s) for processing the input multi-dimensional embedding of the channel response data 52 (e.g., Hlog). The multi-dimensional encoded channel response data that is output from the final encoder transformer neural network layer and input to the multi-class classification module 58.

The transformer encoder neural network layers of the transformer encoder module 56, the neural network layers and functions of the multiclass classifier in the multi-class classification module 58 and any neural or embedding layers of in the pre-processing components of the pre-processing module 54 are jointly trained. In some example embodiments, the transformer encoder neural network layers, multiclass classifier and/or the pre-processing components may be separately trained as the application demands.

In essence, training uses a plurality of training instances, in which each training instance includes at least data representative of an example input channel frequency response data (e.g., an input vector) of a frequency spectrum and target channel impairment data (e.g., the target multiclass channel impairment output vector). During training, for each training instance, the input channel frequency response data 52 is input to the pre-processing module 54 and subsequently to the transformer module 56 and then the multi-class classification module 58 for outputting a prediction of a multiclass channel impairment estimate, which may be a *M*-dimensional vector representing *M* channel impairment classes.

As an example, each training instance may include data representative of channel response data generated in response to a transmission over an example channel or a simulation thereof, and annotated with target channel impairment data identified in relation to the transmission over the example channel or simulation thereof. In other examples, each training instance may include data representative channel response data generated and measured in response to a transmission over a real-world channel, and annotated with target channel impairment data identified in relation to the transmission over the real-world channel. In another example, each training instance may include data representative of channel response data generated in response to a transmission over a simulated channel and augmented to simulate real-world data losses or spurious noise, and annotated with channel impairment data identified in relation to the transmission over the simulated channel.

During training, a loss function (e.g. categorical cross-entropy loss function for computing a cross-entropy loss between target data (e.g. labels) and predictions thereof) maybe used for comparing the predicted multiclass channel impairment estimate/classification with the corresponding target channel impairment data (e.g. target channel impairment labels) for the input target channel frequency response 52 for use in updating the weights of the pre-processing module 54 (e.g., using backpropagation techniques), transformer module 56, and multi-class classification module 58. This maybe repeated until a stopping criterion is reached such as, for example, without limitation, the transformer-based ML model 50 is considered to be trained, e.g., an error threshold is reached between the target input and output, a maximum number of training iterations has been reached and the like. Although categorical cross-entropy loss function is referred to, this is way by way of example, it is to be appreciated by the skilled person that when performing channel impairment classification, then any suitable cost or loss function may be used such as, without limitation, for example binary cross-entropy, categorical cross-entropy, sparse categorical cross-entropy, Poisson loss function, KL divergence loss function, any other suitable cross-entropy or loss function, combinations thereof, modifications thereto, as herein described, and/or as the application demands.

Training may also be performed using batches of training instances. When a batch of samples of training instance data is applied to the transformer-based ML model, where estimating the loss further includes: estimating, for each training instance in a batch, a loss output from a loss function applied to the estimated channel impairment(s) output by the transformer-based ML model 50 and the target channel impairment(s) of said each training data instance (e.g., difference or categorical cross-entropy between the estimated channel impairment(s) output by the transformer-based ML model 50 and the target channel impairment(s) of said each training data instance); and combining the loss estimates for each training instance in the batch; and updating the set of weights associated with the transformer-based ML model 50 based on the combined estimated loss for said batch of samples. This is iterated for each batch until it is determined that the transformer-based ML model 50 is trained.

Once trained, the trained transformer-based ML model 50 may receive an input sequence of channel response data 52 (e.g., an Hlog vector) associated with a channel that has been measured in real-time and/or determined via simulation of the channel. The input sequence of channel response data 52 is applied to the pre-processing module 54 coupled to the transformer module 56, which outputs a multi-dimensional encoding (or encoded Hlog) of the input channel response data 52 for input to the multi-class classification module 58 configured for outputting a predicted multi-class channel impairment estimate for the channel input response 52.

The input sequence of channel response data 52 may be an ordered sequence of *N* channel response values (e.g., 512 or any suitable length vector) of different tones equally spaced apart in ascending order of frequency over a frequency spectrum from a first frequency (e.g., fi) to a second frequency (e.g., f2). The input channel response data 52 (e.g., Hlog) may comprise an attenuation value at each spaced apart tone (frequency) represented by the elements of the vector which spans the frequency spectrum over frequency range [fi, f2]. It is to be appreciated that other input data formats for the input channel response data can be used instead of, or in combination with, the data formats of the system 50. For example, for channel responses of space-time coding wireless systems using antenna arrays, the input data may be represented as a two-dimensional matrix of channel response data or even as a single vector of concatenated rows or columns of the two dimensional matrix of channel response data.

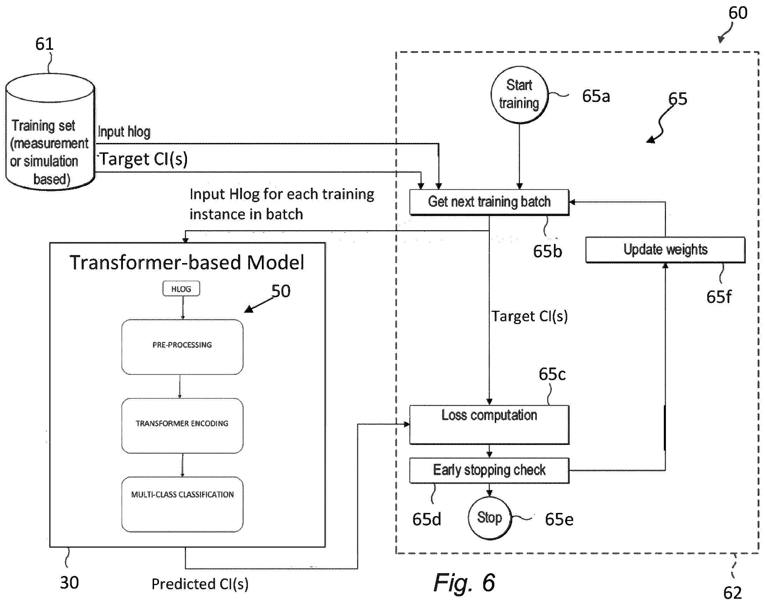

FIG. 6 is a block diagram of a training means or system, indicated generally by the reference numeral 60, in accordance with an example embodiment of apparatus 30 implementing the transformer-based ML model 50 of FIG. 5. In this figure the apparatus 30 receives the training data, so the apparatus 30 is depicted during its operation in the training mode in which the transformer-based ML model 50 is trained for predicting an estimate of one or more channel impairments from an input channel frequency response.

In a specific embodiment a training data generation module 61 obtains or generates a training data set comprising a plurality of training data instances. This training data may be generated based on measurement and/or simulation as explained before. As shown in FIG. 6, the training data generation module 61 outputs measured (or simulated) input channel frequency response data (e.g., Input Hlog) annotated with target channel impairments (e.g., Target CI(s)) of the channel corresponding to the input channel frequency response, which may be retrieved/received by a training module 62, which is configured to perform an iterative training process 65 for training the transformer-based ML model 50. The input channel frequency response data may be represented as a vector of a size N (e.g., *N*>*0*) in which the vector elements are represented as channel response values (e.g., attenuation) at generally equally spaced apart frequencies over a first frequency spectrum range (e.g. [fi, f2]) between a first frequency (e.g., fi) and a second frequency (e.g., f2). Each target CI(s) associated with an input channel frequency response data may be represented as a channel impairment label or value, or as an *M*-dimensional vector of *M* elements, *M*>1, in which each element is representing a particular channel impairment label/value from a set of *M* channel impairments or channel impairment classes (e.g., a first element corresponding to no-channel impairment label/value, followed by one or more subsequent elements each corresponding to a different channel impairment label/value).

The training process 65 performed by the training module 61includes at least the following training operations comprising: in operation 65a, the training process 65 may be started based on receiving a training initiation signal 65a for triggering training of the transformer-based model 50 of apparatus 30, where in operation 65b, a batch of training data is retrieved by getting a next training batch of one or more training instances from the training data set repository 61. Each training data instance may include an example input Hlog and corresponding one or more types of target channel impairments (e.g. Target CIs) identified in relation to the example input Hlog. For example, the example input Hlog may be annotated with one or more target CI labels/classes, where the Transformer-based ML model 50 is configured to predict the target CI labels/classes when an example input Hlog is applied as input. Each of the training instances (e.g. Input Hlog) of a batch may be input, e.g. one after the other, to the transformer-based ML model 50 of apparatus 30. The transformer-based ML model 50 of apparatus 30 includes a set of weights/parameters arranged according to the particular type of transformer-based ML model topology (e.g. pre-processing/transformer encoder/multiclass ML topology) used for the transformer-based ML model 50, where the set of weights/parameters are configured to generate or predict as output an estimate of one or more channel impairments, under the form of e.g. an M-dimensional channel impairment vector, (e.g., Predicted CI(s)) of the channel associated with each input training data instance). In operation 65c, a loss computation is performed between the target CI data (e.g., Target CIs) of each of the training instances of the training batch retrieved in operation 65b and the corresponding Predicted CIs output from the Transformer-based ML model 50For example, the loss computation may be performed based on, without limitation, for example comparing each target CI data with the corresponding predicted/estimated target CI data (e.g. Predicted CIs) and calculating (using an appropriate loss function for the type of ML model topology/classification) a loss for the training batch.

With the loss estimated for the training batch, in operation 65d, an early stopping check is performed for determining whether the transformer-based ML model 50 of apparatus 30 has been validly trained (e.g., if a particular model accuracy has been achieved or if the model is no longer learning, thereby avoiding overfitting and/or unnecessarily losing computational resources; and/or a maximum number of iterations have been performed and the like). If so, training module 65 terminates training of the transformer-based ML model 50 of apparatus 30 by proceeding to operation 65e for stopping training; otherwise, operation 65f is proceeded with in which the estimated loss for the training batch may be used for updating the weights/parameters of the transformer-based ML algorithm associated with the transformer-based ML topology (e.g. gradient backpropagation) of the transformer-based ML model 50. For example, the weights/parameters of the transformer-based ML model 50 of apparatus 30 are updated using the estimated loss for the training batch in accordance with machine-learning principles and/or the transformer-based ML model topology of transformer-based ML model 50 of apparatus 30. Once the weights/parameters of the transformer-based ML model 50 of apparatus 30 have been updated, the training process proceeds to operation 65b for performing another iteration of the training process, where operation 65b fetches a further batch of training data from the training data set 61 and the training process 65 as described above with respect to figure 6 maybe repeated.

A number of possible loss functions that may be used in example implementations of the loss computation operation 65c that may be configured to minimise an objective such as, without limitation, for example, categorical cross-entropy loss between the *M-*dimensional predicted CI and the *M*-dimensional target CI, difference or similarity between *M*-dimensional predicted CI and the *M*-dimensional target CI, Kullback-Leibler divergence, and/or any other type of objective or function suitable for use estimating a loss for the training batch and updating the sets of weights/parameters of the transformer-based ML model 50 of apparatus 30 and/or for use in determining whether a stopping criterion in operation 65d is achieved and the like.

Transformer-based ML models are a completely different model architecture compared with other types of conventional neural network ML models such as, without limitation, for example feed forward neural network (FNN), recursive neural network (RNN), long-time short memory neural network, convolutional neural network (CNN) models and the like. Transformer-based ML models make use of self-attention layers or even multi-head self-attention layers to encode multiple relationships and nuances for and between each patch, token or groupings of the input channel response data. This provides an advantage of a transformer-based ML models over other more conventional neural networks, such as CNNs, of having the capability to learn relationships between the different tokens, patches or groupings of the channel response data within a sequence and model the global relationships. Thus, when used for predicting channel impairments from an input 1-dimnensional channel frequency response the layers of self-attention mechanism, which weight differentially the significance of each of the sequential input channel response data, learn relationships between the different tokens, patches or groupings of the channel response data within a sequence and model the global relationships. It has been found that this ability significantly improves the accuracy performance (e.g., at least a 10% performance improvement) of a transformer-based ML model for predicting channel impairments over a channel (e.g., a DSL line) from an input channel frequency response data when compared with similar conventional neural network systems, such as a CNN for performing such a function.

The notion of self-attention brought by the transformer-based ML model permits for some tokens, patches or groups of tones of the input channel frequency response (e.g., patches for Visualisation Transformers (ViT) or groupings of extracted features from a CNN of a CNN based Transformer (CCT)) to stand out and to focus on those that are the most important for the channel impairment classification task. The self-attention mechanism also permits to the transformer encoder ML model to compare each token, patch or grouping of the input sequence with all other tokens, patches or groupings, whether it's before, closer or far away from each other. Given this and that the transformer-based ML model is capable of building better global relationships/representations of the input data, a further advantage of using the transformer-based ML model as described herein is that it is better able to cope with corrupted input channel frequency response data due to the ability to build/learn a better global representation. This is particularly so given that collected Hlog measurement data measured in the field can be corrupted (e.g., missing sporadic data, missing parts of the frequency spectrum, distorted values/tones, etc ...). This corruption may also be captured by the transformer-based ML model by training not only on simulated data, but also an augmented dataset that is representative of corrupted field data. The inherent properties of the transformers-based ML model further improve the prediction performances of classification of channel impairments given an input channel frequency response.

Although several types of transformer encoders are described herein, this is by way of example only and the invention is not so limited, it is to be appreciated by the skilled person that other transformer-based encoder models may be used and/or applied to the transformer-based ML model such as, without limitation, for example Convolutional Visual Transformer (ConViT), Convolutional neural networks Meet Vision transformers (CMT), Compact Visual Transformer (CVT) and/or any other transformer-based ML model, transformer encoder layer, transformer encoder architecture/topology and/or as described herein, combinations thereof, modifications thereto, and the like and/or as the application demands.

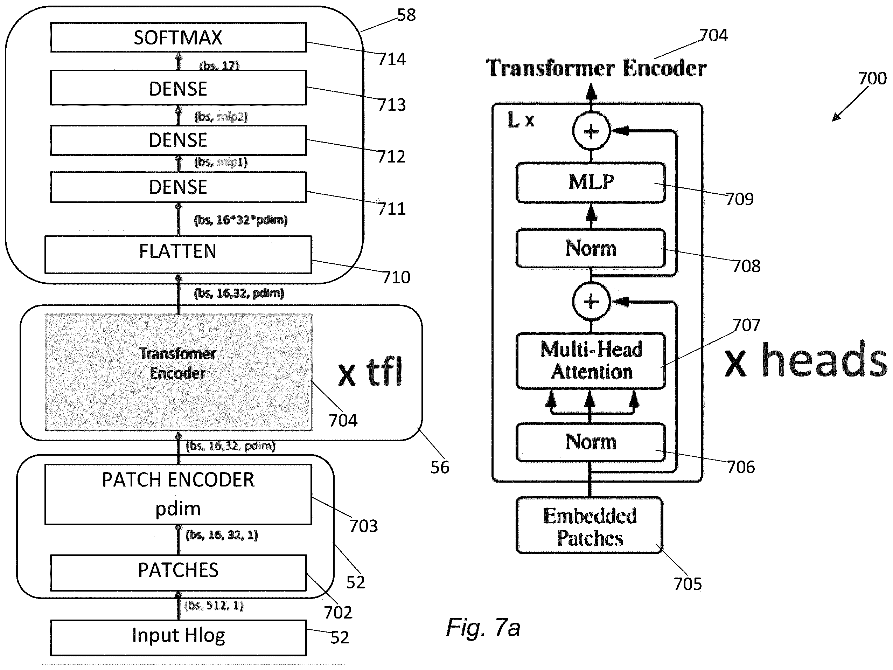

FIG. 7a is a block diagram of an example transformer-based ML model 700 for use in apparatus 30, system 40 and/or training system 60 in accordance with an example embodiment. The transformer-based ML model 700 may further modify the transformer-based ML model 50 of FIG. 5 and may be used to implement the transformer-based ML model 40 or 50 of apparatus 30 as described herein. Reference numerals of the transformer-based ML model 50 of FIG. 5 may be reused for similar or the same components.

The transformer-based ML model 700 includes a pre-processing module 54, transformer encoder module 56 and multi-class classifier 58. The pre-processing module 54 and transformer encoder module 56, which includes transformer encoder layers 704, are based on a visual transformer (ViT) model, but which has been modified to enable a batch of i-dimensional Hlog vectors 52 (e.g., Hlog (*bs, N,* 1), where bs represents the batch size, *bs*>=*1*, *N* represents the size of the Hlog vector), to be applied as input to the transformer-based ML model 700.

The size of each 1-dimensional Hlog vector in a batch may be reduced depending on the minimum operating frequency of the communication system. In this example, each 1-dimensional Hlog vector has a size *N*=512 tones. The batch of Hlog 1-D input vectors represented as a multidimensional array Hlog *(bs,* 512, 1) is passed to the pre-processing module 54, in which a patch processor 702 is configured to split each 1-dimensional Hlog vectors in the batch into a number p of patches with a patch size of *ps*>*1*. In this example, each Hlog vector in the batch is split into 32 patches with a patch size 16 (e.g., *p*=32, *ps* = 16), resulting in a multi-dimensional Hlog *(bs,* 16, 32, 1). Although in this example *p*=32 and *ps*=16, this is for simplicity and by way of example only, it is to be appreciated by the skilled person that any other suitable number of patches *p*>1 and patch size, *ps*, may be applied as the application demands. The multidimensional Hlog *(bs,* 16, 32, 1) is then passed to a patch encoder 703 that is configured for performing a 1D positionally-encoding of the multi-dimensional Hlog *(bs,* 16, 32, 1) into a number of *pdim* projection dimensions to form a multidimensional Hlog embedding (*bs, p, ps, pdim*) (e.g., multidimensional Hlog embedding (*bs*, 16, 32, *pdim*)) for passing as embedded patches 705 into the transformer encoder module 56.

The transformer encoder module 56 may include *Nx*=tfl transformer encoder layers 704, where *tfl*>=*1*, each transformer encoder layer includes a transformer encoder neural network composed of a normalisation layer 706, a multi-head attention layer 707, another normalisation layer 708 and finally a multilayer perceptron layer 709. The transformer encoder module 56 processes the embedded patches 705 (e.g., multidimensional Hlog embedding (*bs*, 16, 32, *pdim*)) of the input channel frequency response 52 using the one or more transformer encoder layers in which the final transformer encoder layer outputs a multi-dimensional Hlog encoding (bs, p, ps, pdim) of the input channel response. The output multi-dimensional Hlog encoding (bs, p, ps, pdim) from the transformer encoder module 56 is passed to the multi-class classifier module 58 for predicting a multiclass channel impairment estimate for the batch, represented as multiclass channel impairment estimate array or vector of size (bs, *M*), where in this example the number of channel impairment classes is, without limitation, for example *M*=17. Each element of the multiclass channel impairment estimate array or vector may represent or comprise a different type of channel impairment or channel impairment class such as, without limitation, for example no impairment or NIL, BTap, capacitive coupling, resistive coupling, insulation fault, mismatched segments, degraded contact, and/or any other type of channel impairment or channel configuration/materials and the like that may indicate and/or affect the performance of communicating over a channel of the communication link associated with the input channel frequency response. As well, multiple channel impairments may be present where multiple corresponding elements of the multiclass channel impairment estimate array or vector may have a value indicating that channel impairment is predicted to be present.

The multi-class classification module 58 includes a flattening neural network 710, several dense neural networks 711-713, and a SoftMax activation neural network 714. The flattening neural network 710, dense neural networks 711-713, and SoftMax activation neural network 714 are configured such that the output multi-dimensional Hlog encoding (bs, p, ps, pdim) is reduced by the flattening and several dense layers 710-713 along with SoftMax activation 714 to an output predicted multiclass channel impairment estimate corresponding to *M* channel impairment classes for each Hlog in the batch, which may be represented by output predicted multiclass channel impairment estimate matrix of size (bs, *M*).

Although a particular configuration of the pre-processing module 56 with patch and patch embedding neural network, transformer encoder layers 704, and the multi-class classification module 58 with the flattening neural network 710, dense neural networks 711-713, and SoftMax activation neural network 714 has been described herein, this is by way of example only and the invention is not so limited, it is to be appreciated by the skilled person that any other suitable configuration or architecture/topology pre-processing module 56, transformer encoder layers 704, and the multi-class classification module 58 may be used and/or applied as the application demands.

Typically, ViT transformers are used in image recognition domains where the general principle is to split an image into several small fixed-size patches, perform a linear projection to have flattened patches and add the position embedding. Once the image input has been reformatted as described, the embedded patches are used as input of one or several transformer encoder layers composed of a normalisation layer, a multi-head attention layer, another normalisation layer and finally a multilayer perceptron. After the (multiples) transformer encoder layers, the image classification is done thanks to a final multilayer perceptron head ended by a SoftMax function for the final classification task.

However, as discussed above, the transformer-based ML model 700 is configured to use, instead of 3D or 2D matrices, a 1-dimensional signal (Hlog) which is simply a vector of *N* values (e.g., *N*=512). Thus, in applying the ViT methods to the 1-dimensional Hlog signal, the signal is split into smaller patches and embed the 1-D position, prior to input to the (multiples) transformer encoder layers 704 of the transformer encoder module 56. One additional constraint imposed by the ViT architecture is that the inputs of the model should be a multiple of the patch size and, as such, the Hlog input sequence of *N*=512 values is used, for simplicity and by way of example only, where at least in some cases (e.g., for G.Fast DSL) at least the first few tones (e.g., five tones) may not contain any relevant data.

The transformer-based ML model 700 may be configured using several hyperparameters such as, without limitation, for example the batch size (*bs*), number of patches (*p*), patch size (*ps*), the number of projection dimensions *(pdim),* the number of transformation layers (*Nx=tfl*), the number of multi-attention heads (*h*) in each of the transformer encoder layers 704 and the multilayer perceptron final layers (*mlp*) 709. Once these are selected and chosen (e.g., using grid search, genetic or other hyperparameter selection techniques), the transformer-based ML model 700 may be trained using a suitable training dataset or a plurality of training instances as described with reference to figures 4 to 6.

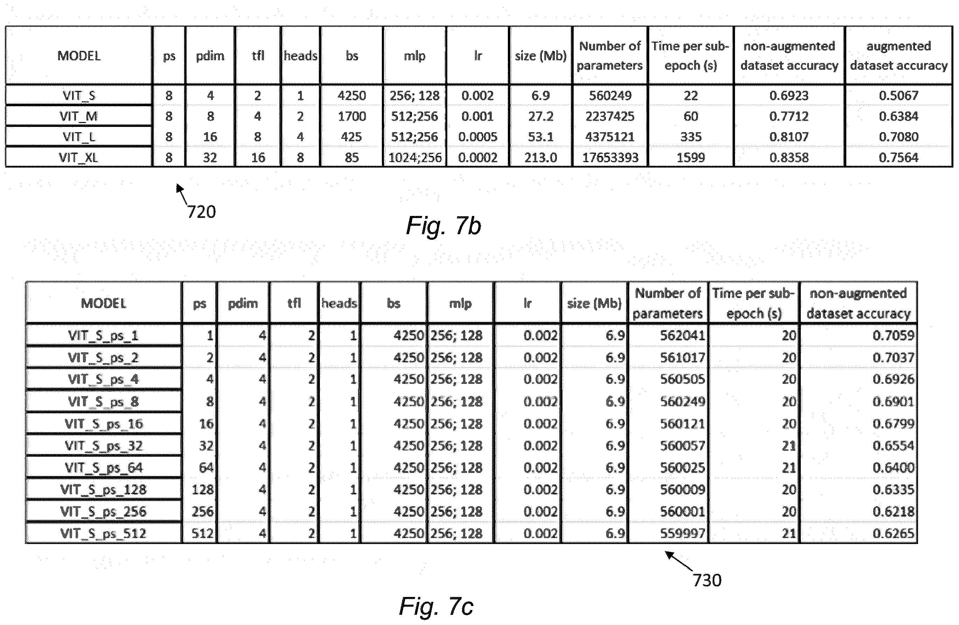

FIG. 7b is a table illustrating performance results and model parameters for the example transformer-based ML model 700 of figure 7a in accordance with an example embodiment. In this example, the hyperparameters of the transformer-based ML model 700 were selected with a fixed patch size (*ps*=8), started from a small ViT model (*pdim*=4, *tfl*=2, *heads or h*=1) and then doubled each of the hyperparameters (except for final mlp layers) to build several transformer-based ML models denoted VIT_S(mall), VIT_M(edium), VIT_L(arge) and VIT_X(tra) L(arge). Each of these transformer-based ML models 700 were trained on a non-augmented training dataset that included training data instances of simulated channel impulse responses annotated known channel impairments, and an augmented training data set that included training data instances of the simulated channel impulse responses annotated with known channel impairments as well as augmented simulated channel impulse responses annotated with known channel impairments, where the augmented simulated channel impulse response were modified to reflect real-world field measurements and inaccuracies that occur in the field (e.g. missing data, spurious values, noise, and other data corruptions etc.).

As seen in FIG. 7b, the bigger the transformer-based ML model 700, the higher the number of parameters and, with the XL model, this reached 17.6M, which also resulted in increased accuracy. As well, when reducing the batch size *bs,* to keep the gradient expectation constant, the learning rate (lr) was reduced accordingly, for example using the rule: ratio_lr≈sqrt(ratio_bs). When analysing the accuracies reached on the two datasets, a non-augmented training dataset and an augmented training dataset, it is observed from FIG. 7b that the accuracy is increases significantly with the model size. For the non-augmented dataset, with the XL model, an accuracy of 83.58% is achieved. But for the augmented dataset, with the XL model, the 75.64% of accuracy when compared with a CNN configured and trained in a similar manner there is approximately a 10% performance gain, which confirms that the transformer-based ML model 700 is more robust to missing data, corruptions, distributional shifts etc. As well, these results indicate that contrary to popular belief, it is not mandatory to explore and select the best hyperparameters for the transformer-based ML model 700 through long and complex genetic grid search. Rather, simply increasing the model size by increasing the projected dimension *(pdim),* the number of transformer encoder layer (*tfl*) and the number of multi-attention heads (*heads or h*) tends to improve the performance of the transformer-based ML model 700 at the expense of the model size and training time. Thus, the skilled person may select an appropriate set of hyperparameters simply by varying *pdim, tfl, heads* or *h.*

FIG. 7c is another table 730 illustrating further performance results and model parameters for the example transformer-based ML model 700 of figure 7a in accordance with an example embodiment. As described with reference to FIG. 7b, the performance analysis in table 720 was conducted with a fixed patch size (*ps*) of 8 as hyperparameter. In order to determine the effect of patch size (ps) on the performance of the transformer-based ML model 700, the VIT_S(mall) model as described with reference to FIG. 7b was selected to determine how the accuracy varies with patch size. As seen in Table 730, there is an advantage in using the transformer-based ML model 700 with a small patch size of ps= 1 or 2, which produced the best accuracy results (> 70%). The patch size of 8 though still produces good performance, with an increase in accuracy with a patch size of 1 or 2. Using a patch size of 1 or 2 may result in longer training times compared with a patch size of 8, so the skilled person may select the appropriate patch size for the transformer-based ML model 700 depending on the various trade-offs required for the particular application. Although there is a small difference between the accuracies for the same VIT_S(mall) model trained with a patch size of 8 (69.23%) in FIG. 7b and (69.01%) in FIG. 7c, this is due to randomly initialized weights at the model initialisation during training.

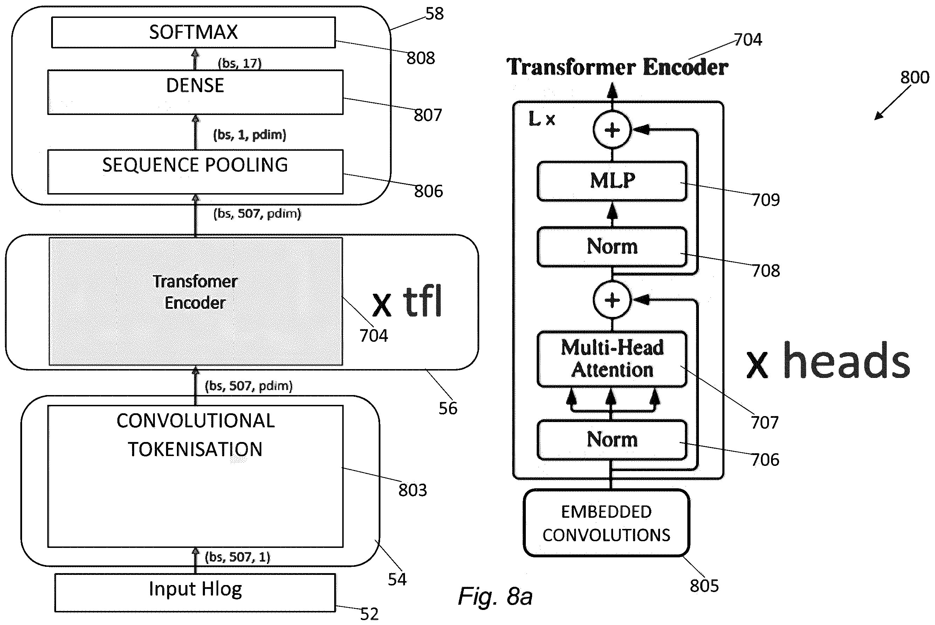

FIG. 8a is a block diagram of an example transformer-based ML model 800 for use in apparatus 30, system 40 and/or training system 60 in accordance with an example embodiment. The transformer-based ML model 800 may further modify the transformer-based ML model 50 of FIG. 5 and the transformer-based ML model 700 of FIG. 7a and may be used to implement the transformer-based ML model 40 or 50 of apparatus 30 as described herein. Reference numerals of the transformer-based ML model 50 of FIG. 5 and the transformer-based ML model 700 of FIG. 7a may be reused for similar or the same components.

The transformer-based ML model 800 includes a pre-processing module 54, transformer encoder module 56 and multi-class classifier 58. The pre-processing module 54 and transformer encoder module 56, which includes transformer encoder layers 704, are based on a compact convolutional transformer (CCT) model, but which has been modified to enable a batch of 1-dimensional Hlog vectors 52 (e.g., Hlog (*bs, N,* 1), where bs represents the batch size, *bs*>=*1*, *N* represents the size of the Hlog vector), to be applied as input to the transformer-based ML model 800.

In this example, the DSL communication system is based on G.fast with an operating frequency spectrum starting at a first minimum operating frequency of 2.2MHz and a second maximum operating frequency of 212MHz. Thus, even though the Hlog measurement for G.fast DSL channels results in a 1-D sequence of 512 values, this typically covers a frequency spectrum up to 212MHz, with a tone spacing of 51.750 kHz and a carrier grouping factor of 8. The first 5 tones corresponding to frequencies below 2.2MHz may be removed as these do not contain any relevant information, so in this example, each of the 1-dimensional Hlog vectors 52 are limited to 507 values instead of 512 values.

In this example, each 1-dimensional Hlog vector has a size *N*=507 values / tones. The batch of Hlog 1-D input vectors represented as a multidimensional array Hlog *(bs,* 507, 1) is passed to the pre-processing module 54, which includes convolutional tokenization layer 803 that applies pairs of convolution and pooling layer(s) to the multidimensional array Hlog *(bs,* 507, 1) signal to extract features of the corresponding channel impulse responses in the batch and adds 1D positional-encoding. That is, each G. fast 1-dimensional Hlog vector in the batch is passed through corresponding channels of the pairs of convolutional and pooling layers of the convolutional tokenization layer 803. The final pair of convolutional and pooling layers is configured to output a 1D positional-encoding of the multi-dimensional Hlog *(bs,* 507, 1) into a number of *pdim* projection dimensions to form a multidimensional Hlog embedding (*bs*, 507, *pdim)* (e.g., multidimensional Hlog embedding (*bs*, 507, *pdim*)) for passing as embedded convolutions 805 into the transformer encoder module 56. The dimension of the output space after the last convolutional and pooling layer (chan_12) is aligned with the number of projections dimensions (pdim) used in the transformer encoder layers 704 of the transformer encoder module 56.

The transformer encoder module 56 may be based on the transformer encoder module of FIG. 7a, which includes *N*x=tfl transformer encoder layers 704, where *tfl>*=*1*, each transformer encoder layer includes a transformer encoder neural network composed of a normalisation layer 706, a multi-head attention layer 707, another normalisation layer 708 and finally a multilayer perceptron layer 709. The transformer encoder module 56 processes the convolutional embeddings 805 (e.g., multidimensional Hlog embedding (bs, 507, *pdim*)) of the input channel frequency response 52 using the one or more transformer encoder layers in which the final transformer encoder layer outputs a multi-dimensional Hlog encoding (bs, 507, pdim) of the input channel response. The output multi-dimensional Hlog encoding (bs, 507, pdim) from the transformer encoder module 56 is aggregated through a Sequence Pooling layer 806 and dense layers 807 of the multi-class classifier 68 before the final batch classification to M channel impairments with SoftMax activation layer 808. Thus, the output multi-dimensional Hlog encoding (bs, 507, pdim) is passed to the multi-class classifier module 58 for predicting a multiclass channel impairment estimate for the batch, represented as multiclass channel impairment estimate array of size (bs, *M*), where in this example the number of channel impairment classes is, without limitation, for example *M*=17.

In this example, the multi-class classification module 58 includes a Sequence Pooling layer 806, a dense neural network 807, and a SoftMax activation neural network 808. The Sequence Pooling layer 806, the dense neural network 807, and the SoftMax activation neural network 808 are configured such that the output multi-dimensional Hlog encoding (bs, 507, pdim) is reduced by the Sequence Pooling layer 806, the dense neural network 807, and the SoftMax activation neural network 808 to an output predicted multiclass channel impairment estimate corresponding to *M* channel impairment classes for each Hlog in the batch, which may be represented by output predicted multiclass channel impairment estimate matrix of size (bs, *M*).

Although a particular configuration of the pre-processing module 56 with convolutional tokenisation layer 803, transformer encoder layers 704, and the multi-class classification module 58 with the Sequence Pooling layer 806, the dense neural network 807, and the SoftMax activation neural network 808 has been described herein, this is by way of example only and the invention is not so limited, it is to be appreciated by the skilled person that any other suitable configuration or architecture/topology pre-processing module 56, transformer encoder layers 704, and the multi-class classification module 58 may be used and/or applied as the application demands.

Given that CNNs tend to learn local interactions and extract feature sets of the input data using the convolutional and pooling layers and transformer-based encoder layers learn global interactions of the input data using self-attention learn global interactions, the transformer-based ML model 800 combines the advantages and mechanisms of both CNNs and transformer encoders to thereby condition the input channel frequency response on the local content while modelling the global relationships. Thus, by pre-processing the input channel frequency response Hlog 52 using some convolution layers 803 (e.g., aka. convolutional tokenisation) before applying the pre-processed input channel frequency response to some transformer layers enabling learning of long-range dependencies, on top of convolutions, which ensures more local interactions are also captured.

The transformer-based ML model 800 may configured using several hyperparameters such as, without limitation, for example the batch size (*bs*), the number of projection dimensions *(pdim),* the number of transformation layers (*Nx=tfl*), the number of multi-attention heads (*h*) in each of the transformer encoder layers 704 and the multilayer perceptron final layers (*mlp*) 709. Once these are selected and chosen (e.g., using grid search, genetic or other hyperparameter selection techniques), the transformer-based ML model 800 may be trained using a suitable training dataset or a plurality of training instances as described with reference to figures 4 to 6.

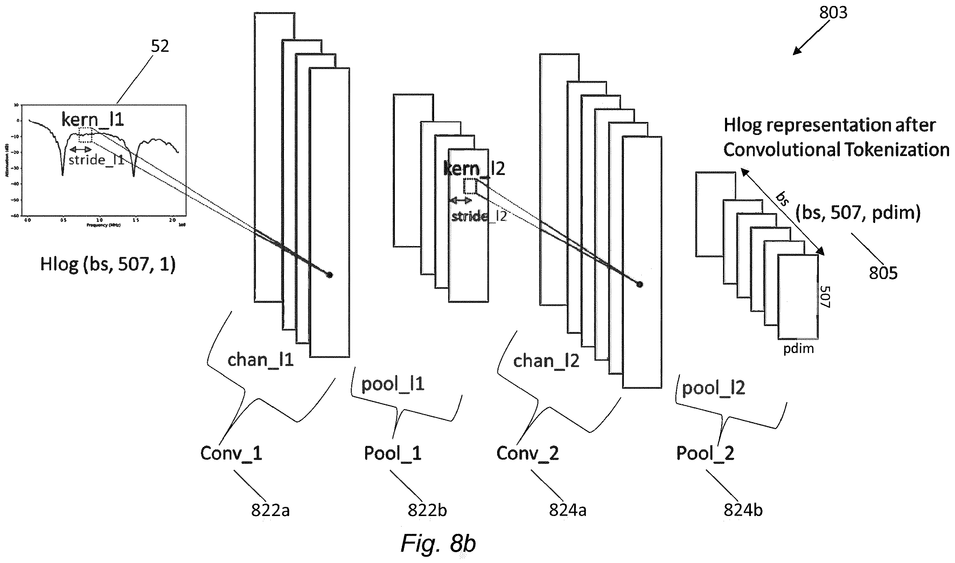

FIG. 8b is a block diagram of an example ML pre-processing model 803 for the transformer-based ML model 800 of figure 8a according with an example embodiment. The ML pre-processing model 803 is based on the convolutional tokenisation layer 803 described with reference to FIG. 8a. This is essentially a convolutional encoder without the fully connected layer at the output, but instead multiple pairs of sequential convolutional and pooling layers 822a and 822b (e.g. [Conv_1, Pool_1]) and 824a and 824b (e.g. [Conv_2, Pool_2]), with the final pooling layer 824b in the final pair of convolutional and pooling layers 824a and 824b configured to match the required multidimensional Hlog embedding (bs, 507, *pdim)* 805, which is passed as embedded convolutions 805 to the transformer encoder module 56.

The convolution tokenisation layer 803 is part of a neural network performing successive convolutional and pooling layers 822a and 822b, and 824a and 824b in order to create and extract relevant channel response features from the input channel frequency response data (e.g., Hlog) 52 that is input to the convolutional tokenisation layer 803 as a vector. As described, the input channel frequency response data 52 may consist of a one-dimensional vector representing the input channel frequency response data.

In this example, there are two pairs of convolution and pooling layers 822a, 822b and 824a and 824b. The first convolutional layer 822a (e.g. Conv_1) has associated hyperparameters kern_l1, chan_l1, and stride_l1, where kern_l1 is the size of the kernel for the first convolutional layer 822a, chan_l1 is the number of channels for the first convolutional layer 822a, and stride_l1 is the stride length for the first convolutional layer 822a. Similarly, the second convolutional layer 824a (e.g. Conv_2) has associated hyperparameters kern_l2, chan_l2, and stride_l2, where kern_l2 is the size of the kernel for the second convolutional layer 824a, chan_l2 is the number of channels for the second convolutional layer 824a, and stride_l2 is the stride length for the second convolutional layer 824a. The first pooling layer 822b (e.g., Pool_1) is associated with the hyperparameter pool_l1, which is the size of the pooling window for the first pooling layer 822b, where max pooling is performed. The second pooling layer 824b (e.g., Pool_2) is associated with the hyperparameter pool_l2, which is the size of the pooling window for the second pooling layer 824b, where max pooling is performed. For the convolutional and pooling layers, there is the additional constraint that the dimension of the output space of the last convolutional and pooling layer (e.g., chan_l2) should be aligned with the number of projection dimensions *(pdim)* used in the transformer encoder layers 704.

The hyperparameters for the convolutional tokenisation layer 803 may be found or selected using a genetic algorithm (or other hyperparameter optimisation/selection techniques) to determine the most suitable hyperparameters for the convolution and pooling layers 822a, 822b, 824a, and 824b. This may be performed whilst also selecting the hyperparameters of the transformer encoding layers 704, where several iterations may be performed for changing the number of projection dimensions (pdim) to evaluate the effect on the training time and accuracy.

Once the hyperparameters are selected for the convolutional tokenisation layer 803, both the convolutional tokenisation layer 803, the transformer encoding layers 704 and layers 806-808 of the multiclass classification module 56 may be jointly trained on training dataset as described with reference to figures 4 to 7c.

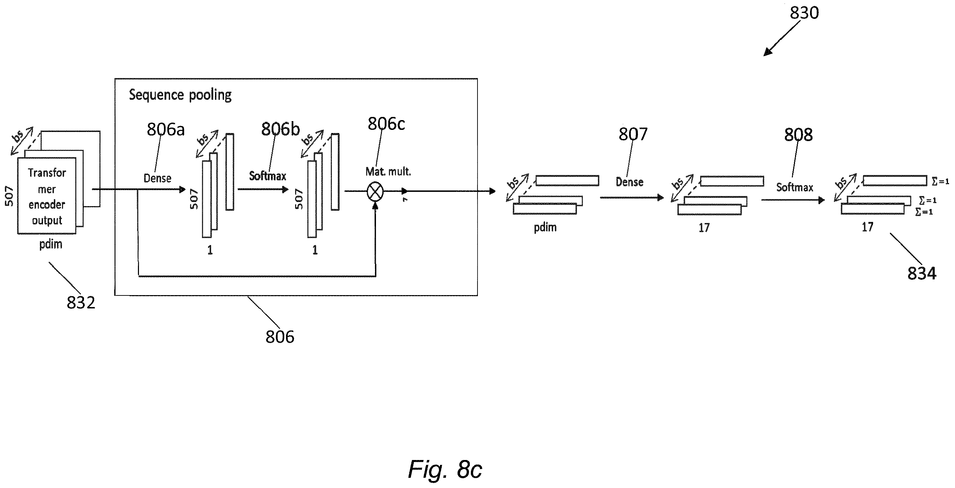

FIG. 8c is a block diagram of an example ML multi-class classifier model 830 for the multi-class classification module 56 of transformer-based ML model 800 of figure 8a according with an example embodiment. Reference numerals of the FIG. 8a are reused for simplicity for the same or similar components and the like. In this example, the ML multi-class classifier model 830 includes a Sequence Pooling layer 806, a dense neural network 807, and a SoftMax activation neural network 808. The Sequence Pooling layer 806, the dense neural network 807, and the SoftMax activation neural network 808 are configured such that the output multi-dimensional Hlog encoding (bs, 507, pdim) 832 is reduced by the Sequence Pooling layer 806, the dense neural network 807, and the SoftMax activation neural network 808 to an output predicted multiclass channel impairment estimate 834 corresponding to *M* channel impairment classes for each Hlog in the batch, which may be represented by output predicted multiclass channel impairment estimate matrix of size (bs, *M*), where in this example *M*=17.

The Sequence Pooling Layer 806 is composed of a dense neural network layer 806a, a SoftMax activation layer 806b and a matrix multiplication component 806c. The Sequence Pooling Layer 806 takes as input the output multi-dimensional Hlog encoding (bs, 507, pdim) 832 from the last of the transform encoding layers 704. The dense layer 806a is configured to process the output multi-dimensional Hlog encoding (bs, 507, pdim) 832 into a first multi-dimensional Hlog sequence (bs, 507,1), which is then passed through the SoftMax activation layer 806b. The SoftMax activation layer 806b is configured to process the first multi-dimensional Hlog sequence (bs, 507, 1) into a second multi-dimensional Hlog sequence (bs, 507, 1). The second multi-dimensional Hlog sequence (bs, 507, 1) and the output multi-dimensional Hlog encoding (bs, 507, pdim) 832 are passed through matrix multiplication component 806c, which performs a matrix multiplication between the second multi-dimensional Hlog sequence (bs, 507, 1) and the output multi-dimensional Hlog encoding (bs, 507, pdim) 832, where the matrix multiplication component 806c is configured to output a sequence pooling multi-dimensional Hlog sequences (bs, 1, *pdim)* or a sequence pooling multi-dimensional Hlog matrix (bs, *pdim).*

The sequence pooling multi-dimensional Hlog matrix (bs, *pdim)* is passed to the dense neural network layer 807, which is configured to process the sequence pooling multi-dimensional Hlog matrix (bs, *pdim)* into a dense multi-dimensional channel impairment matrix (*bs, M*), which is passed through the SoftMax activation neural network 808, which is configured to output predicted multiclass channel impairment estimate 834 corresponding to *M* channel impairment classes for each Hlog in the batch, which may be represented by output predicted multiclass channel impairment estimate matrix of size (bs, *M),* where in this example *M*=17.

The transformer encoding layers 704 and layers 806-808 of the multiclass classification module 56 may be jointly trained on training dataset as described with reference to figures 4 to 7c.

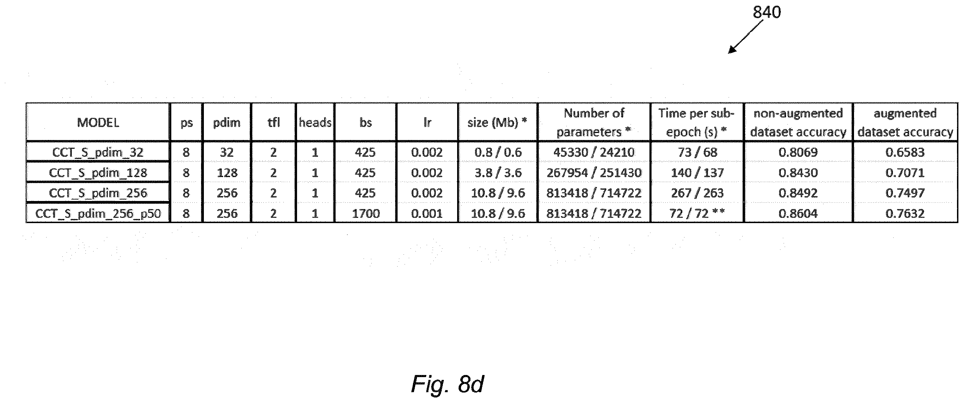

FIG. 8d is a table 840 illustrating performance results and model parameters for the example transformer-based ML model 800 of figure 8a in accordance with an example embodiment. The transformer-based ML model 800 of figure 8a may be configured to implement the convolutional tokenisation layer 803 and multi-class classifier 830 as described with reference to figures 8b and 8c.

The hyperparameters for the convolutional tokenisation layer 803 and/or the multi-class classifier 830 may be found or selected using a genetic algorithm (or other hyperparameter optimisation/selection techniques) to determine the most suitable hyperparameters for the convolution and pooling layers 822a, 822b, 824a, and 824b, and the most suitable neural network configurations for the Sequence Pooling layer 806, a dense neural network 807, and a SoftMax activation neural network 808. This may be performed whilst also selecting the hyperparameters of the transformer encoding layers 704, where several iterations may be performed for changing the number of projection dimensions (pdim) to evaluate the effect on the training time and accuracy. Once the hyperparameters are selected for the convolutional tokenisation layer 803, both the convolutional tokenisation layer 803, the transformer encoding layers 704 and layers 806-808 of the multiclass classification module 56 may be jointly trained on non-augmented and augmented training datasets as described with reference to figures 4 to 8b.

Table 840 illustrates the transformer encoder hyperparameter values and accuracy performance results for the transformer-based ML model 800 (e.g., CCT model) using a S(mall) transformer Encoder Layer. As can be seen, the accuracy increases when augmenting *pdim* from 32 to 256 to reach an improvement over the transformer-encoder ML model 700. In the table 840, it is noted that: ^{∗} augmented / non-augmented dataset values as despite that the same high-level model architecture has been used, the best model's convolution related hyperparameter (kernel size, filters, pooling ratio, etc.) are different after the genetic hyperparameter optimization when training with the non-augmented or the augmented dataset; and ^{∗∗}CCT_S_pdim_256_p50 model was trained using data parallelism on 4 GPUs compared to the other CCT models in the table 840 which have been trained using the genetic algorithm on 1 GPU per model.

The CCT models for the transformer-based ML model 800 are relatively more compact (e.g., a low number of parameters) compared to the ViT models of the transformer-based ML model 700 whilst also achieving an improved accuracy of 86.04% and 76.32% respectively on the non-augmented and augmented datasets. The advantages of the transformer-based ML model 800 over the transformer-based ML model 700 may be due to the convolutional tokenisation layer 803 performing feature extraction of the channel impulse response prior to applying to the multi-headed attention layer on the extracted features, which is not performed in the ViT transformer-based ML models 700. In addition, a further advantage of the transformer-based ML model 800 is that the sequence pooling 806 of the multi-class classifier 56 reduces drastically, but intelligently, the dimensions before passing through the dense SoftMax layers (e.g., MLP) 807 and 808 for classification.

The example transformer-based ML models and the various layers and/or functions of the pre-processing, transformer encoder, and/or multiclass classification modules as herein described may be implemented and/or realised by present available software and/or hardware as is well known by the skilled person in the art.

Although the *M* channel impairment estimates/classes is illustrated in figures 7a-8d as being *M*=17, this for simplicity and by way of example only, it is to be appreciated by the skilled person that the number M of channel impairment estimates/classes may be any suitable number of channel impairment estimates/classes *M*>1 (e.g., a no impairment estimate/class and one or more channel impairment estimates/classes), as herein described, and/or as the application demands.

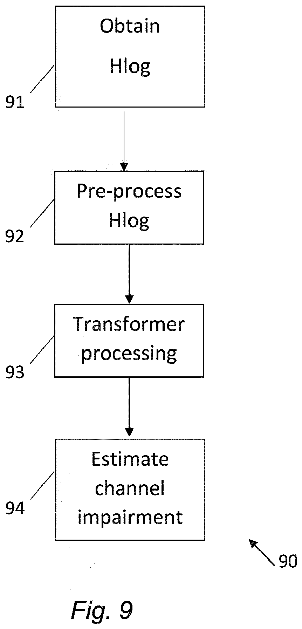

FIG. 9 is a flow chart showing method steps, e.g., an algorithm, indicated generally by the reference numeral 90, in accordance with an example embodiment. The algorithm 90 may be implemented by/using the apparatus 30 for implementing the transformer-based ML model. In this example, the transformer-based ML model may be based on the visualisation transformer model 700 of FIG 7a or the CCT model 800 of FIG. 8a, or any other suitable transformer-based ML model and the like, such as Visual Transformers, Compact Convolutional Transformers, Compact Visual Transformers, Convolutional Visual Transformers, Convolutional neural networks Meet Vision transformers, and the like, combinations thereof, modifications thereto, as herein described, and the like and/or as the application demands.

The example method 90 starts at operation 91, where an input channel response over a frequency spectrum is obtained by measurement of a transmission signal or simulation. The input channel response (e.g., Hlog) may have been obtained via transceiver unit measurements, e.g., in response to a transmission of a reference signal over a channel of communication link 16 or by a simulation thereof.

At operation 92 a channel response may be embedded and/or the feature set is extracted from the input channel response data by applying the input channel response data to an pre-processing component (e.g. an embedding encoder or a suitably trained convolutional encoder), which may be further processed at operation 93 by a suitable transformer encoder neural network to generate a multi-dimensional output embedding for applying at operation 94 to a multi-class classifier configured for generating an estimate of one or more channel impairments (e.g. M-dimensional channel impairment vector) associated with the channel of a communication link corresponding to the input channel response data.

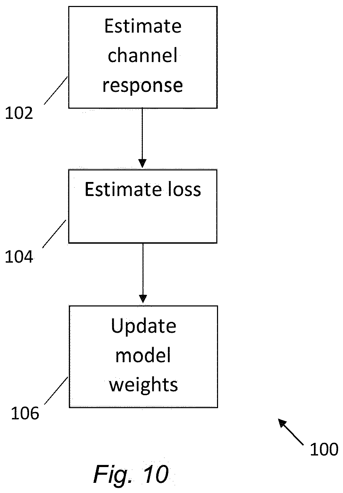

FIG. 10 is a flow chart showing an example training method or algorithm for applying a loss function to update weights of a transformer-based ML model, indicated generally by the reference numeral 100, in accordance with an example embodiment.

The algorithm 100 starts at operation 102, where one or more target channel impairment(s) are estimated for specific training data sets which are determined beforehand. For example, the operation 102 may be implemented using the algorithm 90 or some similar algorithm.

Such a training data set should contain examples of input channel frequency responses over corresponding frequency spectrums (e.g., input Hlog), which are annotated with corresponding target channel impairment labels/classes. This means that for each different network topology (loop length, cable type, termination, presence or not of impairments like bridged-tap, contact issue or other types of impairments etc.), the training data set comprising the input channel frequency responses (=input) and corresponding target channel impairment labels/classes that are to be predicated. The training data sets could be obtained, for example, by real-time in the field measurements, systematic lab measurements, and/or simulation. Given that the transformer-based ML model is a system that leverages Deep Learning, training the transformer-based ML model requires a lot of example training instances (perhaps hundreds of thousands or millions) for it to be able to converge within an error threshold and the like.

As an option, the training data set can also be obtained via simulations, which represent different loop topologies and/or channel impairments and which are able to generate the input channel frequency responses at an input frequency spectrum and corresponding target channel impairments and a mapping to corresponding channel impairment classes/labels. Simulations enable the correct labelling of simulator data and may be used to generate millions of training data sets. Furthermore, the training data instances when generated by simulation may be further augmented to reflect real-life scenarios by purposely degrading the input channel frequency responses in accordance with degradations that occur with input channel frequency response measurements (e.g., missing, spurious, noisy, or outlier frequency response values and the like). Thus, may further enhance the robustness of the trained transformer-based ML model.

At operation 104, a loss is estimated, based on a difference or similarity (or other measure) between a predicted channel impairment estimate(s) output by the transformer-based ML model (e.g., as estimated in the operation 102) and a target channel impairment(s) as being part of the training data set.

At operation 106, model weights of the transformer-based ML model that are configured, depending on the transformer-based ML model topology, and used to generate the predicted channel impairment estimate(s) are updated based on the loss estimated in the operation 104. For example, the model weights may be updated using backpropagation or any other appropriate update algorithm depending on the transformer-based ML model topology.

The training data set may include a plurality of training instances for a variety of channel impairment categories and/or channel configurations. For example, for a communication link with a channel comprising a DSL twisted pair cable, the different classes of channel impairments that may be used during transformer-based ML model training include, without limitation, for example : no impairment or non-impaired line (NIL), bridged tap (BTap), capacitive coupling, insulation fault, mismatched segments, degraded contact, and/or any other type of channel impairment or channel configuration/materials and the like that may affect the performance of communicating over the channel of the communication link. The training data set comprising a plurality of training instances may be built from collecting real-world measurements and/or via simulation of one or more configurations of the channel communication link (e.g., real-world measurements of the physical cable or simulation thereof for various impairments, configurations and the like). Each training instance includes data representative of a measured or simulated input channel frequency response over an input frequency spectrum, which may be annotated with one or more target channel impairments in relation to the input channel response. These may be used to train the transformer-based ML model, where the trained transformer-based ML model is subsequently used with real-world input channel frequency response measurements for predicting one or more channel impairments of the corresponding channel associated with the channel frequency response measurements.

Despite the training set contains a finite number of impairments simulated or measured, the present approach is not limited to only those impairments. If others are known and measurements have been obtained of such, the training set can be improved by adding simulations of those new impairments and the transformer-based ML model could be retrained in order to take them into account.

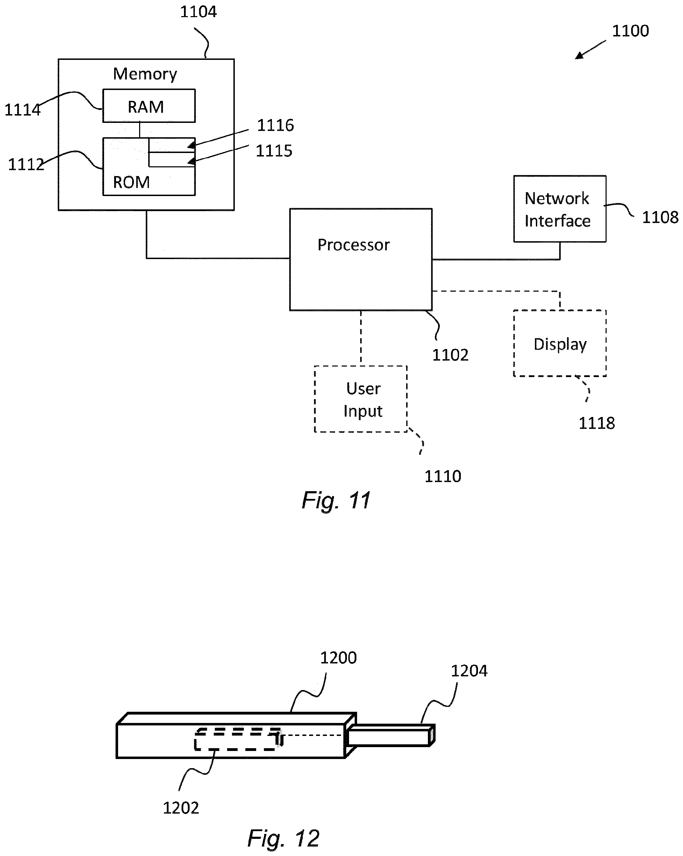

For completeness, FIG. 11 is a schematic diagram of components of one or more of the example embodiments described previously, which hereafter are referred to generically as a processing system 1100. The processing system 1100 may, for example, be (or may include) the apparatus referred to in the claims below.

The processing system 1100 may have a processor 1102, a memory 1104 closely coupled to the processor and comprised of a RAM 1114 and a ROM 1112, and, optionally, a user input 1110 and a display 1118. The processing system 1100 may comprise one or more network/apparatus interfaces 1108 for connection to a network/apparatus, e.g., a transceiver unit which may be wired or wireless. The network/apparatus interface 1108 may also operate as a connection to other apparatus such as device/apparatus which is not network side apparatus. Thus, direct connection between devices/apparatus without network participation is possible.

The processor 1102 is connected to each of the other components in order to control operation thereof. The processor 1102 may take any suitable form. For instance, it may be a microcontroller, a plurality of microcontrollers, a processor, or a plurality of processors.

The memory 1104 may comprise a non-volatile memory, such as a hard disk drive (HDD) or a solid-state drive (SSD). The ROM 1112 of the memory 1104 stores, amongst other things, an operating system 1115 and may store software applications 1116. The RAM 1114 of the memory 1104 is used by the processor 1102 for the temporary storage of data. The operating system 1115 may contain code which, when executed by the processor implements aspects of the apparatus, systems, methods, ML models, and/or algorithms 40, 50, 60, 700, 800, 803, 830, 90, 100 as described above, combinations thereof, modifications thereto, and/or as herein described. Note that in the case of small device/apparatus the memory can be most suitable for small size usage i.e., not always a hard disk drive (HDD) or a solid-state drive (SSD) is used.

The processing system 1100 may be a standalone computer, a server, a console, or a network thereof. The processing system 1100 and needed structural parts may be all inside device/apparatus such as IoT device/apparatus i.e., embedded to very small size. In some example embodiments, the processing system 1100 may also be associated with external software applications. These may be applications stored on a remote server device/apparatus and may run partly or exclusively on the remote server device/apparatus. These applications may be termed cloud-hosted applications. The processing system 1100 may be in communication with the remote server device/apparatus in order to utilize the software application stored there.

FIG. 12 shows tangible media, specifically a removable memory unit 1200, storing computer-readable code which when run by a computer may perform methods according to example embodiments described above. The removable memory unit 1200 may be a memory stick, e.g., a USB memory stick, having internal memory 1202 storing the computer-readable code. The internal memory 1202 may be accessed by a computer system via a connector 1204. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the methods described in the system and/or flow diagrams of any of FIGS. 3-10, combinations thereof, modifications thereto, and/or as herein described are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification. Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising means for performing:
obtaining channel response data comprising a channel frequency response of a channel over a frequency spectrum, wherein the channel frequency response is generated in response to a transmission over the channel or a simulation thereof; and
generating an indication of channel impairments in response to applying the channel response data to a transformer-based machine-learning, ML, model trained to predict a channel impairment estimate.

2. An apparatus as claimed in claim 1, wherein the channel response data comprises a one-dimensional channel response vector comprising data representative of a Hlog channel response.

3. An apparatus as claimed in any preceding claim, the transformer-based ML model further comprising a pre-processing component, coupled to a transformer encoder neural network and multiclass classifier, wherein:
the pre-processing component is configured for pre-processing the channel response data into a multi-dimensional embedding for input to a transformer encoder neural network;
the transformer encoder neural network is configured for processing the multi-dimensional embedding and outputting a multi-dimensional encoded signal of the channel response data;
the multi-class classifier configured for processing the multi-dimensional encoded signal and predicting a multiclass channel impairment estimate.

4. An apparatus as claimed in claim 3, wherein the transformer encoder neural network is a visualisation transformer ML model and the pre-processing unit is configured to encode the channel response data into a multi-dimensional embedding for input to the visualisation transformer ML model.

5. An apparatus as claimed in claim 4, wherein the pre-processing unit is further configured to group the data elements of the input channel response data into patches and generating the multi-dimensional embedding that projects each of the patches along a projection dimension of length pdim.

6. An apparatus as claimed in claim 3, wherein the pre-processing unit is a neural network ML model configured for feature extraction and encoding of the channel response data into a multi-dimensional embedding for input to the transformer encoder neural network.

7. An apparatus as claimed in claim 6, wherein the neural network ML model is configured to process groupings of the data elements of the input channel response data, perform feature extraction of the groupings, and generate a multi-dimensional embedding that projects each of the data elements of the input channel response along a projection dimension of length pdim.

8. An apparatus as claimed in any of claims 6 or 7, wherein the neural network ML model is a convolutional encoder neural network ML model.

9. An apparatus as claimed in claim 8, the convolutional encoder neural network ML model further comprising a neural network of one or more convolution layers, one or more pooling layers, and one or more fully-connected layers configured for extracting a channel response feature set and outputting the multi-dimensional embedding of said channel response feature set for input to the transformer encoder neural network.

10. An apparatus as claimed in any of claims 3 to 9, wherein the transformer encoder neural network comprises one or more transformer encoders coupled together, wherein each transformer encoder comprises one or more multi-headed attention layers, one or more normalisation layers, and wherein at least the final transformer encoder includes one or more multi-layer perceptron layers for outputting the multi-dimensional encoding of the channel response data.

11. An apparatus as claimed in any of the preceding claims, further comprising means for performing:
training of the transformer-based ML model based on:
obtaining training data instances, each training data instance comprising data representative of a channel response and data representative of a target channel impairment associated with the channel response;
applying a training data instance to the transformer-based ML model;
estimating a loss based on a difference between the estimated channel impairment(s) output by the transformer-based ML model and the target channel impairment(s) of each training data instance; and
updating a set of weights associated with the transformer-based ML model based on the estimated loss.

12. An apparatus as claimed in any of the preceding claims, wherein the means comprise:
at least one processor; and
at least one memory including computer program code, the at least one memory and computer program code configured to, with the at least one processor, cause the performance of the apparatus.

13. An apparatus as claimed in any of the preceding claims, wherein the channel is a communications medium comprising a wired communications medium or, a wireless communications medium, or a combination of both.

14. A method comprising:
obtaining channel response data comprising a channel frequency response of a channel over a frequency spectrum, wherein the channel frequency response is generated in response to a transmission over the channel or a simulation thereof; and
generating an indication of channel impairments in response to applying the channel response data to a transformer-based machine-learning, ML, model trained to predicting a channel impairment estimate.

15. A computer program comprising instructions for causing an apparatus to perform at least the following:
obtaining channel response data comprising a channel frequency response of a channel over a frequency spectrum, wherein the channel frequency response is generated in response to a transmission over the channel or a simulation thereof; and
generating an indication of channel impairments in response to applying the channel response data to a transformer-based machine-learning, ML, model trained to predicting a channel impairment estimate.
